Europäisches Patentamt

European Patent Office

Office européen des brevets

(19)

(11) **EP 0 852 662 B1**

(12) ## EUROPÄISCHE PATENTSCHRIFT

(45) Veröffentlichungstag und Bekanntmachung des Hinweises auf die Patenterteilung:
**10.03.1999 Patentblatt 1999/10**

(21) Anmeldenummer: **96943002.4**

(22) Anmeldetag: **18.09.1996**

(51) Int Cl.⁶: **F01N 3/20**, F01N 9/00

(86) Internationale Anmeldenummer:
**PCT/DE96/01768**

(87) Internationale Veröffentlichungsnummer:
**WO 97/12129 (03.04.1997 Gazette 1997/15)**

(54) **VERFAHREN UND VORRICHTUNG ZUR UMSETZUNG EINES SCHADSTOFFES IN EINEM ABGAS AN EINEM KATALYSATOR**

PROCESS AND DEVICE FOR REACTING A POLLUTANT IN AN EXHAUST GAS ON A CATALYST

PROCEDE ET DISPOSITIF POUR FAIRE REAGIR UN POLLUANT CONTENU DANS UN GAZ D'ECHAPPEMENT SUR UN CATALYSEUR

(84) Benannte Vertragsstaaten:
**AT CH DE DK ES FI FR GB IT LI NL SE**

(30) Priorität: **29.09.1995 DE 19536570**

(43) Veröffentlichungstag der Anmeldung:
**15.07.1998 Patentblatt 1998/29**

(73) Patentinhaber: **SIEMENS AKTIENGESELLSCHAFT
80333 München (DE)**

(72) Erfinder: **DÖLLING, Winfried
D-96369 Weissenbrunn (DE)**

(56) Entgegenhaltungen:
**EP-A- 0 498 598          DE-A- 4 315 278
DE-A- 4 410 225          DE-C- 4 310 961**

- **PATENT ABSTRACTS OF JAPAN vol. 010, no. 049 (C-330), 26.Februar 1986 & JP 60 197225 A (MITSUBISHI JUKOGYO KK), 5.Oktober 1985,**
- **PATENT ABSTRACTS OF JAPAN vol. 007, no. 195 (C-183), 25.August 1983 & JP 58 098127 A (HITACHI SEISAKUSHO KK), 10.Juni 1983,**

**Beschreibung**

Die Erfindung betrifft ein Verfahren und eine Vorrichtung zur Umsetzung eines Schadstoffes in einem Abgas an einem Katalysator mit einem Reagens, welches zunächst abhängig von betriebsrelevanten Parametern des Abgases sowie einer Temperatur des Katalysators dosiert und dem Abgas unter Bildung eines Gemisches zugegeben und das Gemisch über den Katalysator geführt wird. Die Vorrichtung umfaßt dabei eine Zugabevorrichtung zur Dosierung und Zugabe eines Reagens' unter Bildung eines Gemisches, den Katalysator führbar ist sowie Sensorelemente zur Messung betriebsrelevanter Parameter des Abgases und eine Steuereinheit zur Steuerung der Dosierung abhängig von den betriebs relevanten Parametern und einer Temperatur des Katalysators.

Ein solches Verfahren und eine solche Vorrichtung gehen hervor aus der DE 43 15 278 A1 und der DE 33 37 793 C2. Gemäß jedem dieser Dokumente erfolgt bei einem entsprechenden Verfahren oder an einer entsprechenden Vorrichtung eine Temperaturmessung an dem Katalysator; zusätzlich werden betriebsrelevante Parameter des Abgases ermittelt, insbesondere Temperatur, Massendurchsatz, chemische Zusammensetzung und dergleichen, und die jeweils erforderliche Zugabe des Reagens' wird abhängig von diesen Parametern gesteuert.

Es ist bekannt, die bei der Verbrennung von Kraftstoff in einer Verbrennungsmaschine entstehenden Stickoxide nach Zusetzung eines Reagens' in Form eines Reduktionsmittels in den Abgasstrom in einem nachfolgenden Katalysator abzubauen. So werden Stickoxide durch Zugabe des Reduktionsmittels Ammoniak in einem im Reduktionskatalysator zu Stickstoff und Wasserdampf reduziert. Die zuzugebende Menge an Reagens muß zur Vermeidung eines Überschusses und einer Unterdeckung genau an die katalytische Aktivität des Katalysators angepaßt werden.

Zur Anpassung der zuzugebenden Menge an Reduktionsmittel in der Aufwärmphase eines Katalysators ist es aus der DE-PS 43 10 961 bekannt, mehrere Sensoren zur Temperaturmessung im Inneren des Katalysators einzusetzen und unter Berücksichtigung der im Inneren des Katalysators gemessenen Temperaturen in Anpassung an die katalytische Aktivität der Katalysatorabschnitte vor, zwischen und hinter den Sensoren eine angepaßte Zugabe von Reduktionsmittel vorzusehen. Hierdurch wird beispielsweise eine bereits vorhandene Teilaktivierung des Katalysators in der Aufwärmphase ermittelt, und es kann somit bereits in der Aufwärmphase eine angepaßte Menge an Reduktionsmittel zugegeben werden.

Aus den Patent Abstracts of Japan, JP 60 197225 ist es ferner bekannt, aus der Abgastemperatur am Einlaß des Katalysators mittels eines "catalyst temperature simulators" die Temperaur des Katalysators zu ermitteln und diese bei der Festlegung der zuzugebenden Menge an Reduktionsmittel bezüglich der Speicherkapazität des Katalysators zu berücksichtigen.

Der Erfindung liegt nun die Aufgabe zugrunde, ein Verfahren der eingangs genannten Art sowie eine entsprechende Vorrichtung anzugeben, bei welchen von einem einsatz von Temperatursensoren im Inneren des Katalysators abgesehen werden kann, wobei allerdings jeweils die von der Temperatur abhängige und bei geringen Temperaturen überhaupt nicht vorhandene katalytische Aktivität des Katalysators berücksichtigt wird.

Zur Lösung der auf ein Verfahren bezogenen Aufgabe angegeben wird ein Verfahren zur Umsetzung eines Schadstoffes in einem Abgas an einem Katalysator mit einem Reagens, welches zunächst abhängig von betriebsrelevanten Parametern des Abgases sowie einer Temperatur des Katalysators dosiert und dem Abgas unter Bildung eines Gemisches zugeben und das Gemisch über den Katalysator geführt wird, wobei die Temperatur rekursiv als orts- und zeitabhängige Funktion in dem Katalysator aus den betriebsrelevanten Parametern des Abgases sowie aufbaurelevanten Parametern des Katalysators bestimmt wird, indem der Katalysator aufgeteilt wird in Teilbereiche, welche nacheinander von dem Abgas beaufschlagt werden, und die Temperatur für jeden Teilbereich gesondert bestimmt wird, und wobei eine Aktivität in dem Katalysator als orts- und zeitabhängige Funktion aus der Temperatur bestimmt und das Reagens abhängig von der Aktivität dosiert wird.

Das erfindungsgemäße Verfahren erfordert keine Temperaturmessung im Inneren des Katayalysators; dahingegen wird die Temperatur im Inneren des Katalysators, die zur Beurteilung der katalytischen Aktivität des Katalysators wesentlich ist, im Rahmen eines rekursiven Modells ermittelt, das lediglich betriebsrelevante Parameter des Abgases und aufbaurelevante, insbesondere also zeitlich unveränderliche, Parameter des Katalysators benötigt. Die im Rahmen des Modells durchzuführende Berechnung hat im wesentlichen Wärmeflüsse zwischen dem Katalysator und dem Abgas sowie im Inneren des Katalysators zu reproduzieren; für diese Wärmeflüsse maßgeblich sind betriebsrelevante Parameter des Abgases, welche die Zufuhr von Wärme durch das Abgas beschreiben, sowie aufbaurelevante Parameter des Katalysators, insbesondere diejenigen Parameter, die seine Geometrie und seine Masse bestimmen, sowie spezifische Parameter wie Wärmekapazität und Wärmeleitfähigkeit. Die Modellrechnung geht aus von einer vorgegebenen Verteilung der Temperatur im Inneren des Katalysators, welche insbesondere dann, wenn die Einrichtung, die das Abgas emittiert, in Betrieb gesetzt wird, konstant und gleich der Temperatur der Umgebung des Katalysators angesetzt werden kann. Das Modell ermittelt dann abhängig von den betriebsrelevanten Parametern die zeitliche Entwicklung der Verteilung der Temperatur. Ist die Temperatur im Inneren des Katalysators bekannt, so kann aus dieser Temperatur über einen an sich bekannten Zusammenhang, welcher im einzelnen Fall gegebenenfalls experimentell zu verifizieren ist, die katalytische Aktivität des Katalysators als orts- und zeitabhängige Funktion ermittelt werden. Aus dieser Funktion wird dann ein angepaßter Wert für die Dosierung des Reagens in das Abgas errechnet, welcher angepaßte Wert beispielsweise derart gewählt wird, daß eine so weit wie möglich vollständige Umsetzung des Schadstoffes erreicht wird mit der Maßgabe, daß das dem Abgas zugeführte Reagens vollständig in dem Katalysator umgesetzt wird.

Dabei wird die Ortsabhängigkeit der Temperatur in dem Katalysator derart bestimmt, daß der Katalysator für das Modell aufgeteilt wird in Teilbereiche, welche nacheinander von dem Abgas beaufschlagt werden, wobei die Temperatur für jeden Teilbereich gesondert bestimmt wird. Die Bestimmung der Temperatur eines ersten Teilbereiches und die Bestimmung der Temperaturen folgender Teilbereiche erfolgen vorzugsweise nach bestimmten Formeln, die anhand eines Ausführungsbeispiels näher erläutert werden. Ausgehend von der Temperatur jedes Teilbereiches kann eine zugehörige katalytische Aktivi- tät des Teilbereiches bestimmt werden, und eine katalytische Gesamtaktivität des Katalysators wird vorzugsweise angesetzt als arithmetisches Mittle der katalytischen Aktivitäten der Teilbereiche.

Das erfindungsgemäße Verfahren sieht insbesondere vor, betriebsrelevante Parameter des Abgases über Sensorelemente zu erfassen und an eine Steuereinheit weiterzuleiten. Die erfaßten Parameter sowie zusätzliche konstante Größen in Form aufbaurelevanter Parameter des Katalysators, wie Katalysatormasse, spezifische Wärmekapazitäten des Katalysators und des Abgases bzw. der Luft, werden dann in der Steuereinheit zur Berechnung der jeweiligen momentanen katalytischen Aktivität des Katalysators verwendet.

Vorzugsweise werden im Rahmen des Verfahrens als einzige betriebsrelevante Parameter der Massenstrom des den Katalysator anströmenden Abgases sowie die Eintrittstemperatur, mit welcher das Abgas in den Katalysator eintritt, bestimmt.

Außerdem vorzugsweise wird das Verfahren begonnen bei Beginn einer Beaufschlagung des Katalysators mit dem Abgas, wobei die Temperatur des Katalysators zu Beginn angesetzt wird als konstant und gleich einer Umgebungstemperatur des Katalysators.

In Abhängigkeit von der ermittelten jeweiligen katalytischen Aktivität des Katalysators kann eine Steuerung der Dosierung über eine Zugabevorrichtung erfolgen, und es kann stets genau diejenige Menge an Reagens zugegeben werden, welche zum momentanen Zeitpunkt im Katalysator umsetzbar ist.

Es ist nicht notwendig, im Inneren des Katalysators einen oder mehrere Temperatursensoren anzubringen. Als betriebsrelevante Parameter können vorteilhafterweise allein der Massenstrom des Abgases sowie die Eintrittstemperatur des Abgases in den Katalysator festgestellt werden. Dies bedeutet gerade bei größeren Katalysatoren eine bedeutende Vereinfachung und wesentliche Verringerung der Störanfälligkeit.

Durch Durchführung der Verfahrensschritte Messung betriebsrelevanter Parameter, Bestimmung der katalytischen Aktivität, Steuerung der Dosierung in regelmäßigen Zeitabständen, kann die jeweils zuzuführende Menge an Reagens genau an die momentane katalytische Aktivität des Katalysators angepaßt werden.

Vorteilhafterweise wird das mit einem äußerst geringen Vorrichtungsaufwand durchführbare Verfahren zur optimierten Zuführung des Reagens' sowohl in der Aufwärm- als auch in der Abkühlphase des Katalysators, auch bei positiven und negativen Lastsprüngen, verwendet. Die bei derartigen Lastsprüngen auftretenden Schwankungen des Massenstroms des Abgases sowie die Änderung der Eintrittstemperatur, mit der das Abgas in den Katalysator eintritt, werden wiederum zur Berechnung der momentanen katalytischen Aktivität des Katalysators verwendet, woraufhin die erwünschte Anpassung der Dosierung an das momentan erhöhte oder abgesenkte Lastniveau sichergestellt wird.

Zur Lösung der auf eine Vorrichtung bezogenen Aufgabe angegeben wird erfindungsgemäß eine Vorrichtung zur Umsetzung eines Schadstoffes in einem Abgas, mit einer Zugabevorrichtung zur Dosierung und Zugabe eines Reagens' unter Bildung eines Gemisches, mit einem Katalysator, über den das Gemisch führbar ist, mit Sensorelementen zur Messung betriebsrelevanter Parameter des Abgases und einer Steuereinheit zur Steuerung der Dosierung abhängig von den betriebsrelevanten Parametern und einer Temperatur des Katalysators, bei welcher Vorrichtung die Steuereinheit einen Speicher aufweist, in welchem aufbaurelevante Parameter des Katalysators gespeichert sind, und welche eingerichtet ist zur rekursiven Bestimmung der Temperatur als orts- und zeitabhängige Funktion in dem Katalysator abhängig von den betriebsrelevanten Parametern und den aufbaurelevanten Parametern, wozu der Katalysator aufgeteilt wird in Teilbereiche, welche nacheinander von dem Abgas beaufschlagt werden, und die Temperatur für jeden Teilbereich gesondert bestimmt wird, zur Bestimmung einer Aktivität in dem Katalysator als orts- und zeitabhängige Funktion und zur Dosierung des Reagens' abhängig von der Aktivität.

Wesentliche Vorteile dieser Vorrichtung erschließen sich aus den Ausführungen zum erfindungsgemäßen Verfahren, auf welche hiermit verwiesen wird.

Die erfindungsgemäße Vorrichtung zeichnet sich durch einen geringen apparativen Aufwand aus und kann von im Inneren des Katalysators angeordneten Sensorelementen zur Temperaturbestimmung völlig absehen.

Die Vorrichtung benötigt allein Sensorelemente zur Erfassung des Massenstroms des Abgases und der Eintrittstemperatur des Abgases in den Katalysator. Vorzugsweise sind nur Sensorelemente zur Messung des Massenstroms und der Eintrittstemperatur vorgesehen. Zur Vermeidung einer Verfälschung des Meßergebnisses ist ein Sensorelement zur Messung des Massenstroms des Abgases vorteilhafterweise (bezogen auf die Strömungsrichtung des Abgases) stromaufwärts gegenüber der Zugabevorrichtung für das Reagens angeordnet.

Im Rahmen der Erläuterung der Erfindung ist stets auf ein "Abgas" Bezug genommen worden. Unter diesem Begriff soll aber nicht ausschließlich ein Abgas aus einem Verbrennungsprozeß verstanden werden; der Begriff soll sich auf jedwedes schadstoffbeladene und zu entsorgende Gas beziehen, also auch auf verunreinigte Abluft aus einer industriellen Anlage.

Ausführungsbeispiele der Erfindung werden anhand der Zeichnung näher erläutert. In der Zeichnung zeigen:

FIG 1        ein Rechenbeispiel zur Bestimmung der Einzeltemperaturen eines in drei Teilbereiche unterteilten Katalysators,

FIG 2        ein Diagramm zur Bestimmung der katalytischen Aktivität des Katalysators, ausgehend von der jeweiligen Temperatur des Teilbereichs sowie

FIG 3        eine schematische Darstellung des Verbrennungsanlagensystems.

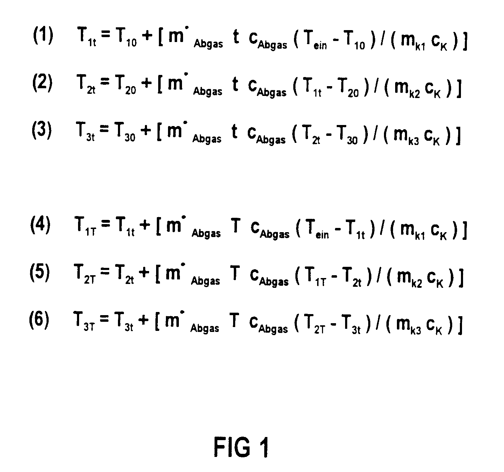

Zunächst wird auf das in FIG 1 dargestellte Rechenbeispiel Bezug genommen. Ausgehend von einem in die drei Teilbereiche $B_1$, $B_2$ und $B_3$ unterteilten Katalysator (2) - vgl. FIG 3 - wird zunächst die Temperatur $T_{1t}$ des ersten Teilbereichs nach dem Zeitintervall t nach Gleichung (1) berechnet: Es fließen hierbei die Ausgangstemperatur $T_{1o}$ des ersten Teilbereichs $B_1$ (die beispielsweise der Umgebungstemperatur entspricht) sowie die durch einen entsprechenden Sensor erfaßte Eintrittstemperatur $T_{ein}$ des Abgases und der durch einen entsprechenden Sensor erfaßte Massenstrom $m_{Abgas}$ des Abgases ein. Als sonstige Größen fließen die spezifischen Wärmekapazitäten $c_{Abgas}$ des Abgases bzw. $c_K$ des Katalysators, die Masse $m_{K1}$ des Teilbereichs $B_1$ des Katalysators sowie das Zeitintervall t, währenddessen die Messung durchgeführt wird, ein. Die ermittelte Temperatur $T_{1t}$ dient nun nach Gleichung (2) zur Bestimmung der Temperatur $T_{2t}$ des Katalysatorbereichs $B_2$. Die Berechnung erfolgt analog nach Gleichung (1) mit dem Unterschied, daß an die Stelle der Eintrittstemperatur $T_{ein}$ in den Katalysator die Temperatur $T_{1t}$ des Teilbereichs $B_1$ des Katalysators verwendet wird. Es wird hierbei davon ausgegangen, daß die aus einem Katalysatorteil $B_{i-1}$ austretende und in das nächste Katalysatorteil $B_i$ eintretende Luft die Temperatur des gerade durchströmten Katalysatorteils $B_{i-1}$ besitzt.

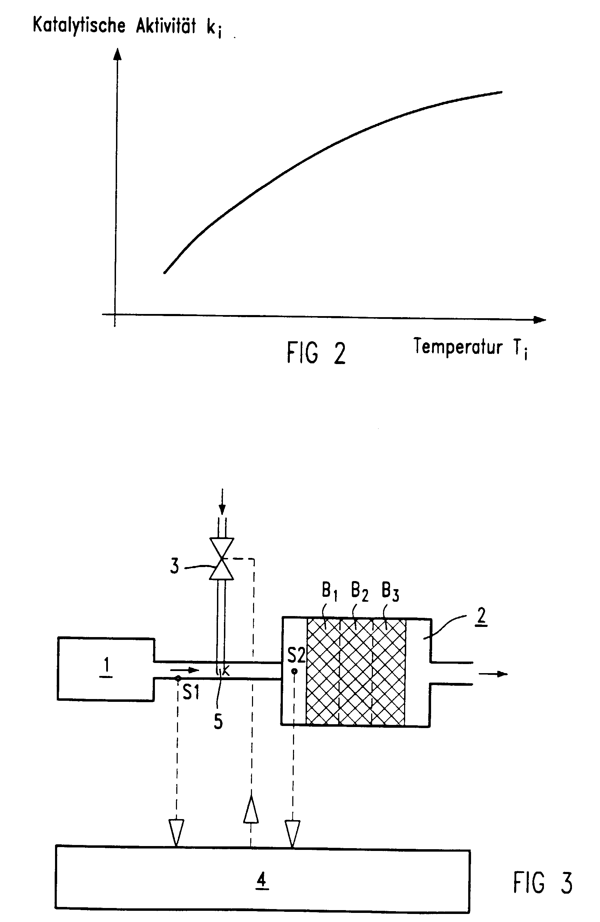

Nach analoger Berechnung der Temperatur des Teilbereichs $B_3$ nach Gleichung (3) liegen nach dem Zeitintervall t die Temperaturen $T_{1t}$, $T_{2t}$ und $T_{3t}$ der einzelnen Teilbereiche des Katalysators vor und es kann nach FIG 2 eine Bestimmung der jeweiligen katalytischen Aktivität $k_{it}$ für jeden der drei Teilbereiche $B_1$, $B_2$ und $B_3$ vorgenommen werden.

Durch die erfindungsgemäße arithmethische Mittelung der einzelnen katalytischen Aktivitäten $k_{1t}$, $k_{2t}$ und $k_{3t}$ der einzelnen Teilbereiche des Katalysators kann eine katalytische Gesamtaktivität $K_t$ des Katalysators nach dem Zeitintervall t berechnet werden und eine Anpassung der dem Abgas zuzuführenden Menge an Reagens erfolgen.

Nach dem Zeitintervall T (wobei T > t) werden nochmals die Temperaturen $T_{1T}$, $T_{2T}$ und $T_{3T}$ nach den Gleichungen (4) bis (6) berechnet und es ergibt sich über die einzelnen katalytischen Aktivitäten $k_{1T}$ bzw. $k_{2T}$ und $k_{3T}$ die katalytische Gesamtaktivität $K_T$ des Katalysators nach dem Zeitintervall T.

Dieser Rechenzyklus kann beliebig oft wiederholt werden. Nach Abschluß eines jeden Rechenzyklus wird die zuzugebende Menge an Reagens an die jeweilige katalytische Gesamtaktivität (im vorliegenden Fall $K_t$ bzw. $K_T$) angepaßt.

Zur weiteren Verdeutlichung des Verfahrens wird in Figur 3 die entsprechende Vorrichtung in thematischer Form abgebildet. Ausgehend von einer Abgasquelle 1 und einem Katalysator 2 erfolgt eine Ermittlung des Abgasmassenstroms durch das Sensorelement S1 und eine Feststellung der Eintrittstemperatur des Abgases in den Katalysator durch das Sensorelement S2. Die ermittelten Daten werden an die Steuereinheit 4 weitergegeben und auf die geschilderte Weise zur Berechnung der katalytischen Gesamtaktivität des Katalysators 2 zum jeweiligen Zeitpunkt verwendet. Daraufhin wird ausgehend von der Steuereinheit 4 über die Zugabevorrichtung 3 die an die momentane katalytische Gesamtaktivitat $K_t$ angepaßt dosierte Menge an Reagens zugegeben.

Das Sensorelement S1 zur Ermittlung des Massenstroms des Abgases befindet sich gegenüber dem Eingabeort 5 des Reagens über die Zugabevorrichtung 3 in einer bezogen auf die Strömungsrichtung des Abgases stromaufwärts gelegenen Position, um eine Verfälschung des Meßergebnisses aufgrund der zugegebenen Menge an Reagens zu vermeiden.

Zur Verdeutlichung folgt eine Liste der in der Zeichnung verwendeten Bezugszeichen und Formelzeichen:

1     Abgasquelle
2     Katalysator
3     Zugabevorrichtung für das Reagens
4     Rechen- und Steuereinheit
5     Eingabeort für das Reagens

$B_i$        Teilbereiche i des Katalysators, i = 1, 2, 3

| | |
|---|---|
| $c_{Abgas}$ | spezifische Wärmekapazität des Abgases |
| $c_k$ | spezifische Wärmekapazität des Katalysators |
| $k_i$ | katalytische Aktivität eines Teilbereichs $B_i$ |
| $K_t$ | katalytische Gesamtaktivität des Katalysators |
| $\dot{m}_{Abgas}$ | Abgasmassenstrom |
| $m_{ki}$ | Masse des Teilbereichs $B_i$ |
| $t$ | Zeitintervall |
| $T$ | Zeitintervall |
| $T_{ein}$ | Eintrittstemperatur des Abgases in den Katalysator |
| $T_{10}$ | Temperatur Teilbereich $B_i$ zum Ausgangszeitpunkt |
| $T_{it}$ | Temperatur Teilbereich $B_i$ nach Zeitintervall $t$ |
| $T_{iT}$ | Temperatur Teilbereich $B_i$ nach Zeitintervall |

**Patentansprüche**

1. Verfahren zur Umsetzung eines Schadstoffes in einem Abgas an einem Katalysator (2) mit einem Reagens, welches zunächst abhängig von betriebsrelevanten Parametern des Abgases sowie einer Temperatur des Katalysators (2) dosiert und dem Abgas unter Bildung eines Gemisches zugegeben und das Gemisch über den Katalysator (2) geführt wird,
**dadurch gekennzeichnet,** daß die Temperatur rekursiv als orts- und zeitabhängige Funktion in dem Katalysator (2) aus den betriebsrelevanten Parametern des Abgases sowie aufbaurelevanten Parametern des Katalysators (2) bestimmt wird, indem der Katalysator (2) aufgeteilt wird in Teilbereiche ($B_1$, $B_2$ etc.), welche nacheinander von dem Abgas beaufschlagt werden, und die Temperatur für jeden Teilbereich ($B_1$, $B_2$ etc.) gesondert bestimmt wird, und daß eine Aktivität in dem Katalysator (2) als orts- und zeitabhängige Funktion aus der Temperatur bestimmt und das Reagens abhängig von der Aktivität dosiert wird.

2. Verfahren nach Anspruch 1, bei dem als einzige betriebsrelevante Parameter der Massenstrom $m_{Abgas}$ sowie die Eintrittstemperatur $T_{ein}$ bestimmt werden.

3. Verfahren nach Anspruch 1 oder 2, welches begonnen wird bei Beginn einer Beaufschlagung des Katalysators (2) mit dem Abgas, wobei die Temperatur des Katalysators (2) zu Beginn angesetzt wird als konstant und gleich einer Umgebungstemperatur des Katalysators (2).

4. Verfahren nach einem der Ansprüche 1 bis 3, bei dem die Bestimmung der Temperatur $T_{1t}$ eines ersten Teilbereichs ($B_1$) des Katalysators (2) nach einem Zeitintervall $t$ gemäß der Formel $T_{1t} = T_{10} + [\dot{m}_{Abgas}\, t\, c_{Abgas}\, (T_{ein}-T_{10})/(m_{k1}\, c_K)]$ erfolgt.

5. Verfahren nach einem der Ansprüche 1 bis 4, bei dem die Bestimmung der Temperatur $T_{it}$ jedes Teilbereiches ($B_2$ etc.), welcher nach dem ersten Teilbereich $B_1$ von dem Abgas durchströmt wird, nach einem Zeitintervall $t$ gemäß der Formel $T_{it} = T_{i0} + [\dot{m}_{Abgas}\, t\, c_{Abgas/Luft}\, (T_{i-1t}-T_{i0})/(m_{ki}\, c_K)]$ erfolgt.

6. Verfahren nach einem der Ansprüche 1 bis 5, bei dem ausgehend von der Temperatur $T_{it}$ eines Teilbereichs ($B_i$) eine katalytische Aktivität $k_{it}$ des Teilbereichs ($B_i$) bestimmt wird.

7. Verfahren nach Anspruch 7, bei dem eine katalytische Gesamtaktivität $K_t$ des Katalysators (2) als arithmethisches Mittel der katalytischen Aktivitäten $k_{it}$ der Teilbereiche ($B_i$) bestimmt wird.

8. Vorrichtung zur Umsetzung eines Schadstoffes in einem Abgas, mit einer Zugabevorrichtung (3) zur Dosierung und Zugabe eines Reagens' unter Bildung eines Gemisches, mit einem Katalysator (2), über den das Gemisch führbar ist, mit Sensorelementen (S1, S2) zur Messung betriebsrelevanter Parameter des Abgases und einer Steuereinheit (4) zur Steuerung der Dosierung abhängig von den betriebsrelevanten Parametern und einer Temperatur des Katalysators (2),
**dadurch gekennzeichnet**, daß die Steuereinheit (4) einen Speicher aufweist, in welchem aufbaurelevante Parameter des Katalysators (2) gespeichert sind, und eingerichtet ist zur rekursiven Bestimmung der Temperatur als orts- und zeitabhängige Funktion in dem Katalysator (2) abhängig von den betriebsrelevanten Parametern und den aufbaurelevanten Parametern, wozu der Katalysator (3) aufgeteilt wird in Teilbereiche ($B_1$, $B_2$ etc.), welche nacheinander von dem Abgas beaufschlagt werden, und die Temperatur für jeden Teilbereich ($B_1$, $B_2$ etc.) gesondert bestimmt wird zur Bestimmung einer Aktivität in dem Katalysator (2) als orts- und zeitabhängige Funktion und zur Dosierung des Reagens' abhängig von der Aktivität.

9. Vorrichtung nach Anspruch 8, bei der nur Sensorelemente (S1, S2) zur Messung eines Massenstroms $\dot{m}_{Abgas}$ des Abgases und der Eintrittstemperatur $T_{ein}$ des Abgases in den Katalysator (2) vorgesehen sind.

10. Vorichtung nach einem der Ansprüche 8 und 9, bei der das Sensorelement (S1) zur Messung des Massenstroms $\dot{m}$Abgas unter Bezug auf eine Stömungsrichtung des Abgases stromaufwärts der Zugabevorrichtung (3) für das Reagens angeordnet ist.

## Claims

1. Method for converting a pollutant in an exhaust gas in a catalytic convertor (2) using a reagent, which is first metered as a function of operational parameters of the exhaust gas and a temperature of the catalytic convertor (2) and is added to the exhaust gas to form a mixture, and the mixture is fed through the catalytic convertor (2), characterized in that the temperature is determined recursively as a spatially and time-dependent function in the catalytic convertor (2) from the operational parameters of the exhaust gas and design parameters of the catalytic convertor (2), by the catalytic convertor (2) being divided into subregions ($B_1$, $B_2$ etc.) which are exposed sequentially to the exhaust gas, and the temperature for each subregion ($B_1$, $B_2$ etc.) being determined separately, and in that an activity in the catalytic convertor (2) is determined as a spatially and time-dependent function from the temperature and the reagent is metered as a function of the activity.

2. Method according to Claim 1, in which the mass flow $m_{exhaust}$ and the entry temperature $T_{in}$ are determined as the only operational parameters.

3. Method according to Claim 1 or 2, which is initiated at the start of exposure of the catalytic convertor (2) to the exhaust gas, the temperature of the catalytic convertor (2) being initially taken as constant and equal to an ambient temperature of the catalytic convertor (2).

4. Method according to one of Claims 1 to 3, in which the temperature $T_{1t}$ of a first subregion ($B_1$) of the catalytic convertor (2) is determined after a time interval t according to the formula $T_{1t} = T_{10} + [\dot{M}_{exhaust}\, t\, C_{exhaust}\, (T_{in}-T_{10}) / (m_{k1}\, c_k)]$.

5. Method according to one of Claims 1 to 4, in which the temperature Tit of each subregion ($B_2$ etc.) through which the exhaust gas flows after the first subregion $B_1$ is determined after a time interval t according to the formula $T_{it} = T_{10} + [\dot{M}_{exhaust}\, t\, c_{exhaust/air}\, (T_{i-1t}-T_{i0})/(m_{ki}\, c_k)]$.

6. Method according to one of Claims 1 to 5, in which a catalytic activity $k_{it}$ of a subregion ($B_i$) is determined on the basis of the temperature $T_{it}$ of the subregion ($B_i$).

7. Method according to Claim 6, in which an overall catalytic activity $K_t$ of the catalytic convertor (2) is determined as the arithmetic mean of the catalytic activity $k_{it}$ of the subregion ($B_i$).

8. Device for converting a pollutant in an exhaust gas, with an additional device (3) for metering and adding a reagent to form a mixture, with a catalytic convertor (2) through which the mixture can be fed, with sensor elements (S1, S2) for measuring operational parameters of the exhaust gas and a control unit (4) for controlling the metering as a function of the operational parameters and a temperature of the catalytic convertor (2), characterized in that the control unit (4) has a memory in which operational parameters of the catalytic convertor (2) are stored and is designed for the recursive determination of the temperature as a spatially and time-dependent function in the catalytic convertor (2) as a function of the operational parameters and the design parameters, to which end the catalytic convertor (2) is divided into subregions ($B_1$, $B_2$ etc.) which are exposed sequentially to the exhaust gas, and the temperature for each subregion ($B_1$, $B_2$ etc.) is determined separately, for determining an activity in the catalytic convertor (2) as a spatially and time-dependent function and for metering the reagent as a function of the activity.

9. Device according to Claim 8, in which only sensor elements (S1, S2) for measuring a mass flow $\dot{M}_{exhaust}$ of the exhaust gas and the entry temperature $T_{in}$ of the exhaust gas into the catalytic convertor (2) are provided.

10. Device according to one of Claims 8 and 9, in which the sensor element (S1) for measuring the mass flow $\dot{M}_{exhaust}$ is arranged upstream of the reagent addition device (3) with respect to an exhaust-gas flow direction.

## Revendications

1. Procédé pour faire réagir une substance polluante d'un gaz d'échappement dans un pot catalytique (2) sur un réactif, qui est dosé d'abord en fonction de paramètres du gaz d'échappement qui sont pertinents pour le fonctionnement ainsi que d'une température du pot catalytique (2) et qui est ajouté au gaz d'échappement avec formation d'un mélange, lequel passe sur le pot catalytique (2),

caractérisé en ce qu'il consiste à déterminer la température de manière récurrente en fonction de l'espace et du temps dans le pot catalytique (2) à partir des paramètres du gaz d'échappement qui sont pertinents pour le fonctionnement ainsi que des paramètres du pot catalytique (2) qui sont pertinents pour la structure, le pot catalytique (2) étant subdivisé en régions ($B_1$, $B_2$, etc.) partielles qui sont alimentées l'une après l'autre par le gaz d'échappement, et la température étant déterminée séparément pour chaque région (B1, B2, etc.) partielle et en ce qu'il consiste à déterminer une activité dans le pot catalytique (2) en fonction de l'espace et du temps et à ajouter le réactif de manière dosée en fonction de l'activité.

2. Procédé suivant la revendication 1, qui consiste à déterminer, comme unique paramètre pertinent pour le fonctionnement, le courant massique $m_{Abgas}$ ainsi que la température $T_{ein}$ d'entrée.

3. Procédé suivant la revendication 1 ou 2, qui commence au début d'une alimentation du pot catalytique (2) en le gaz d'échappement, la température du pot catalytique (2) étant posée au début comme constante et égale à une température ambiante du pot catalytique (2).

4. Procédé suivant l'une des revendications 1 à 3, qui consiste à effectuer la détermination de la température $T_{1t}$ d'une première région ($B_1$) partielle du pot catalytique (2) après un intervalle t de temps suivant la formule $T_{1t} = T_{10} + [m_{Abgas}\, t\, c_{Abgas}\, (T_{ein} - T_{10})/(m_{k1}\, c_k)]$.

5. Procédé suivant l'une des revendications 1 à 4, qui consiste à effectuer la détermination de la température $T_{1t}$ de chaque région ($B_2$ etc.) partielle, qui est parcourue par le gaz d'échappement après la première région $B_1$ partielle, après un intervalle t de temps suivant la formule $T_{1t} = T_{10} + [m_{Abgas}\, t\, c_{Abgas}/air\, (T_{i-1t} - T_{10}) / (m_{k1}\, c_k)]$.

6. Procédé suivant l'une des revendications 1 à 5, qui consiste à déterminer une activité $k_{it}$ catalytique de la région ($B_1$) partielle à partir de la température $T_{1t}$ d'une région ($B_1$) partielle.

7. Procédé suivant la revendication 6, qui consiste à déterminer une activité $k_t$ catalytique totale du pot catalytique (2) sous la forme de la moyenne arithmétique des activités $k_{it}$ catalytiques des régions ($B_i$) partielles.

8. Dispositif pour faire réagir une substance polluante d'un gaz d'échappement, comprenant un dispositif (3) d'addition pour ajouter de manière dosée un réactif avec formation d'un mélange, un pot catalytique (2) sur lequel on peut faire passer le mélange, des éléments (S1, S2) capteurs de mesure de paramètres du gaz d'échappement pertinents pour le fonctionnement et une unité (4) de commande destinée à commander l'addition de manière dosée en fonction des paramètres pertinents pour le fonctionnement et d'une température du pot catalytique (2), caractérisé en ce que l'unité (4) de commande comporte une mémoire dans laquelle sont mémorisés des paramètres du pot catalytique (2) qui sont pertinents pour la structure, et qui est agencée pour déterminer de manière récurrente la température en fonction de l'espace et du temps dans le pot catalytique (2) en fonction des paramètres pertinents pour le fonctionnement et des paramètres pertinents pour la structure, le pot catalytique (2) étant subdivisé en régions ($B_1$, $B_2$, etc.) partielles, qui sont alimentées successivement par le gaz d'échappement et la température de chaque région ($B_1$, $B_2$, etc.) partielle étant déterminée séparément pour déterminer une activité du pot catalytique (2) sous la forme d'une fonction qui varie dans l'espace et dans le temps et pour ajouter de manière dosée le réactif en fonction de l'activité.

9. Dispositif suivant la revendication 8, dans lequel il n'est prévu que des éléments (S1, S2) capteurs de mesure d'un courant massique $m_{Abgas}$ du gaz d'échappement et de la température $T_{ein}$ du gaz d'échappement dans le pot catalytique (2).

10. Dispositif suivant l'une des revendications 8 et 9, dans lequel l'élément (S1) capteur de mesure du courant massique $m_{Abgas}$ de gaz d'échappement est disposé, en se rapportant au sens d'écoulement du gaz d'échappement, en amont du dispositif (3) d'addition du réactif.

$$(1) \quad T_{1t} = T_{10} + [\, \dot{m}_{Abgas} \; t \; c_{Abgas} \, (\, T_{ein} - T_{10} \,) \, / \, (\, m_{k1} \, c_K \,) \,]$$

$$(2) \quad T_{2t} = T_{20} + [\, \dot{m}_{Abgas} \; t \; c_{Abgas} \, (\, T_{1t} - T_{20} \,) \, / \, (\, m_{k2} \, c_K \,) \,]$$

$$(3) \quad T_{3t} = T_{30} + [\, \dot{m}_{Abgas} \; t \; c_{Abgas} \, (\, T_{2t} - T_{30} \,) \, / \, (\, m_{k3} \, c_K \,) \,]$$

$$(4) \quad T_{1T} = T_{1t} + [\, \dot{m}_{Abgas} \; T \; c_{Abgas} \, (\, T_{ein} - T_{1t} \,) \, / \, (\, m_{k1} \, c_K \,) \,]$$

$$(5) \quad T_{2T} = T_{2t} + [\, \dot{m}_{Abgas} \; T \; c_{Abgas} \, (\, T_{1T} - T_{2t} \,) \, / \, (\, m_{k2} \, c_K \,) \,]$$

$$(6) \quad T_{3T} = T_{3t} + [\, \dot{m}_{Abgas} \; T \; c_{Abgas} \, (\, T_{2T} - T_{3t} \,) \, / \, (\, m_{k3} \, c_K \,) \,]$$

# FIG 1

Katalytische Aktivität $k_i$

FIG 2

Temperatur $T_i$

FIG 3